# EUROPEAN PATENT APPLICATION

(11) **EP 3 043 254 A1**
(43) Date of publication of application: **13.07.2016**
(21) Application number: 15200894.2
(22) Date of filing: 17.12.2015
(51) Int. Cl.: G06F 3/0488, G06F 3/01, G06F 3/0482, G06Q 30/06

(54) **DISPLAY APPARATUS AND OPERATION METHOD OF THE SAME**

(30) Priority: 09.01.2015 KR 20150003477
(71) Applicant: Samsung Electronics Co., Ltd, Gyeonggi-do 16677 (KR)
(72) Inventor: PARK, Jung-sun, Gyeonggi-do (KR); KIM, Ho-yeon, Gyeonggi-do (KR); PARK, Kwan-hyung, Seoul (KR); LEE, Tae-young, Gyeonggi-do (KR); CHO, Eun-joo, Gyeonggi-do (KR); LEE, Kwan-min, Seoul (KR)
(74) Representative: Walaski, Jan Filip

(57) **Abstract**

Provided is a display apparatus including a user input unit configured to receive a user's input, a display, and a controller configured to output at least one upper garment product image from a first list of a plurality of upper garment product images in a horizontal line on a screen of the display and output at least one lower garment product image from a second list of a plurality of lower garment product images in a horizontal line below the at least one upper garment product image on the screen. When a flick operation is detected as the user's input, the controller displays movement of the first or second list corresponding to the flick operation on the screen.

## Description

The present invention relates to a display apparatus and an operation method of the same, and more particularly, to a display apparatus and an operation method of the same for enabling interaction with a user to be efficiently performed.

Clothing product advertisements are actively provided through TV, radio, electronic display boards on the Internet, newspapers, magazines, etc. In large clothing product discount stores, a plurality of display apparatuses are installed in prominent locations highly visible to customers to advertise clothing products to customers visiting the stores and advertisement content is provided to the display apparatuses. In such cases, a central system for integrally managing advertisements for a plurality of stores may be constructed.

Such a display apparatus unilaterally provides customers with advertisement content. Because only unilateral advertisement content is provided regardless of requests or interests of customers, there is a problem that the requests of customers are not satisfied and the customers are exposed only to inefficient advertisement.

Accordingly, there is a need for a display apparatus and an operation method of the same capable of enabling direct interaction with users to be performed so that product purchase is induced.

Provided are a display apparatus and an operation method of the same capable of performing efficient interaction with a user.

According to an aspect of an exemplary embodiment, a display apparatus includes a user input unit configured to receive a user's input; a display; and a controller configured to output at least one upper garment product image from a first list of a plurality of upper garment product images in a horizontal line on a screen of the display and output at least one lower garment product image from a second list of a plurality of lower garment product images in a horizontal line below the at least one upper garment product image on the screen, wherein, when a flick operation is detected as the user's input, the controller displays movement of the first or second list corresponding to the flick operation on the screen.

The controller may change an upper or lower garment product image output to a focusing region on the screen according to the movement of the first or second list.

When no other flick operation is detected for a preset time after the flick operation is detected, the controller may remove the remaining product image output outside the focusing region on the screen from the screen.

The controller may perform a process of emphasizing upper and lower garment product images output to the focusing region.

The controller may further output a window for providing additional information when there is a matching relation between upper and lower garment product images output to the focusing region.

The display apparatus may further include: a communication unit configured to communicate with a server for registering data about a plurality of clothing products from a plurality of clothing product sellers, wherein the controller controls the communication unit to receive the first and second lists based on the data from the server.

The controller may output a user interface (UI) for receiving one of a plurality of states selected by the user on the screen, deliver information about the selected state of the plurality of states to the server, and receive the first and second lists from the server.

The controller may output an image indicating the selected state as a background on the screen.

The display apparatus may further include: an imaging unit configured to acquire image data by imaging the user, wherein the controller acquires information about the user based on the image data and adjusts a size and a position of the at least one upper garment product image and a size and a position of the at least one lower garment product image output on the screen based on the user information.

According to an aspect of another exemplary embodiment, an operation method of a display apparatus includes outputting at least one upper garment product image from a first list of a plurality of upper garment product images in a horizontal line on a screen of the display and outputting at least one lower garment product image from a second list of a plurality of lower garment product images in a horizontal line below the at least one upper garment product image on the screen; detecting the user's input as a flick operation; and displaying movement of the first or second list corresponding to the flick operation on the screen.

The first or second list may be moved based on a position at which the flick operation is detected on the screen.

An upper or lower garment product image output to a focusing region on the screen may change according to the movement of the first or second list.

The operation method of the display apparatus may further include removing, when no other flick operation is detected for a preset time after the flick operation is detected, the remaining product image output outside the focusing region on the screen from the screen.

A process of emphasizing upper and lower garment product images output to the focusing region may be performed.

The operation method of the display apparatus may further include further outputting a window for providing additional information when there is a matching relation between upper and lower garment product images output to the focusing region.

The operation method of the display apparatus may further include receiving the first and second lists based on data from a server for registering the data about a plurality of clothing products from a plurality of clothing product sellers.

The receiving of the first and second lists may include outputting a UI for receiving one of a plurality of states selected by the user on the screen; delivering information about the selected state of the plurality of states to the server; and receiving the first and second lists from the server.

The operation method of the display apparatus may further include acquiring image data by imaging the user; acquiring information about the user based on the image data; and adjusting a size and a position of the at least one upper garment product image and a size and a position of the at least one lower garment product image output on the screen based on the user information.

In an aspect of one or more embodiments, there is provided at least one non-transitory computer readable medium storing computer readable instructions which when executed implement methods of one or more embodiments.

These and/or other aspects will become apparent and more readily appreciated from the following description of exemplary embodiments, taken in conjunction with the accompanying drawings in which:
FIG. 1 illustrates a configuration of a display apparatus according to an exemplary embodiment;
FIGS. 2, 3A, 3B, 3C, 4A, 4B, 5A, 5B, 6A and 6B are diagrams illustrating examples of operations of the display apparatus according to an exemplary embodiment;
FIGS. 7, 8, and 9 are diagrams illustrating examples of first and second lists to be managed by the display apparatus according to an exemplary embodiment;
FIGS. 10 and 11 illustrate examples in which the first or second list moves in the display apparatus according to an exemplary embodiment;
FIG. 12 is a diagram illustrating an example in which the display apparatus outputs product images on a screen according to an exemplary embodiment;
FIG. 13 illustrates an example of an upper garment information menu window to be displayed by the display apparatus according to an exemplary embodiment;
FIGS. 14A, 14B, 15A, and 15B illustrate examples of screen control based on a user's input on the display apparatus according to an exemplary embodiment;
FIGS. 16, 17A, 17B, 18A, and 18B are diagrams illustrating examples of operations of the display apparatus according to an exemplary embodiment;
FIG. 19 illustrates a configuration of a display apparatus according to an exemplary embodiment;
FIG. 20 is an example in which the user uses the display apparatus according to an exemplary embodiment;
FIG. 21 is a block diagram illustrating a configuration of the display apparatus according to an exemplary embodiment;
FIG. 22 illustrates an example in which the display apparatus is connected to a server according to an exemplary embodiment; and
FIG. 23 is a flowchart of an operation method of the display apparatus according to an exemplary embodiment.

Reference will now be made in detail to exemplary embodiments, examples of which are illustrated in the accompanying drawings, wherein like reference numerals refer to like elements throughout.

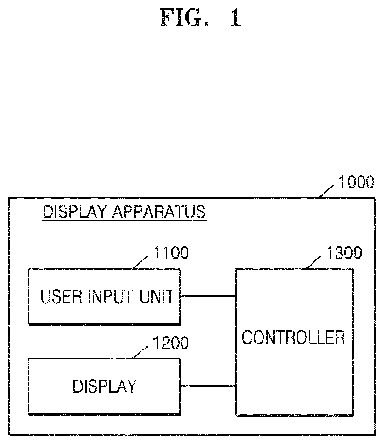

FIG. 1 illustrates a configuration of a display apparatus 1000 according to an exemplary embodiment.

Referring to FIG. 1, the display apparatus 1000 may include a user input unit 1100, a display 1200, and a controller 1300.

The user input unit 1100 allows a user to input data for controlling the display apparatus 1000. The user input unit 1100 may receive at least one of a touch gesture from the user and a motion gesture from the user as the user's input. The user input unit 1100 may include a touch panel capable of receiving the user's touch gesture. The touch panel may detect the user's touch input and output a touch event value corresponding to the detected touch signal. In addition, the user input unit 1100 may include an imaging unit or a motion sensor capable of receiving the motion gesture. The imaging unit may image the user to track a change in the user's motion. The motion sensor may detect the user's motion gesture. However, the user input unit 1100 is not limited thereto. The user input unit 1100 may be implemented to receive at least one of the user's touch gesture and the user's motion gesture as the user's input in various types.

The display 1200 may display an image under control of the controller 1300.

The controller 1300 generally controls the overall operation of the display apparatus 1000. The controller 1300 may control an output of a screen of the display 1200 based on the user's input received from the user input unit 1100. For example, the controller 1300 may include a central processing unit (CPU), a microprocessor, a graphic processing unit (GPU), etc., and is not limited thereto.

The display apparatus 1000 may be a smartphone, a tablet personal computer (PC), a PC, a smart TV, a cellular phone, a personal digital assistant (PDA), a laptop computer, a media player, a micro server, a Global Positioning System (GPS) device, an e-book terminal, a digital broadcasting terminal, a navigation device, a kiosk, a Motion Pictures Expert Group (MPEG-1 or MPEG-2) Audio Layer 3 (MP3) player, a digital camera, or another mobile or non-mobile computing device, but is not limited thereto. The display apparatus 1000 may include all types of devices capable of controlling the screen output based on the user's input.

The controller 1300 may acquire a first list of a plurality of upper garment product images and a second list of a plurality of lower garment product images. In each of the first and second lists, priority of each of the plurality of product images may be set. For example, the controller 1300 may be connected to a server and receive the first and second lists from the server. Alternatively, the controller 1300 may acquire the first and second lists based on data stored in a memory (not illustrated) included in the display apparatus 1000. At this time, the controller 1300 may acquire the first and second lists based on the user's input. However, the present disclosure is not limited thereto, and the controller 1300 may acquire the first and second lists in various schemes.

Hereinafter, the display apparatus 1000 according to the exemplary embodiment will be described in detail with reference to the drawings.

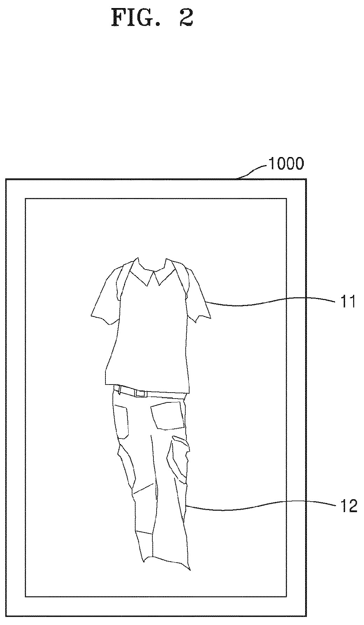

FIGS. 2, 3A, 3B, 3C, 4A, 4B, 5A, 5B, 6A, and 6B are diagrams illustrating examples of operations of the display apparatus 1000 according to an exemplary embodiment.

Referring to FIG. 2, the display apparatus 1000 may output an upper garment product image 11 and a lower garment product image 12 on the screen. The lower garment product image 12 may be output below the upper garment product image 11.

The upper garment product image 11 may be one of a plurality of upper garment product images belonging to the first list and the lower garment product image 12 may be one of a plurality of lower garment product images belonging to the second list. The display apparatus 1000 may output the upper garment product image 11 and the lower garment product image 12 based on priority set in each of the first and second lists. For example, the upper garment product image 11 and the lower garment product image 12 initially output by the display apparatus 1000 may have highest priority in the first and second lists.

The display apparatus 1000 may further output at least one of upper and lower garment product images other than the upper garment product image 11 and the lower garment product image 12 based on the user's input on the screen. The other upper garment product image may belong to the first list and the other lower garment product image may belong to the second list.

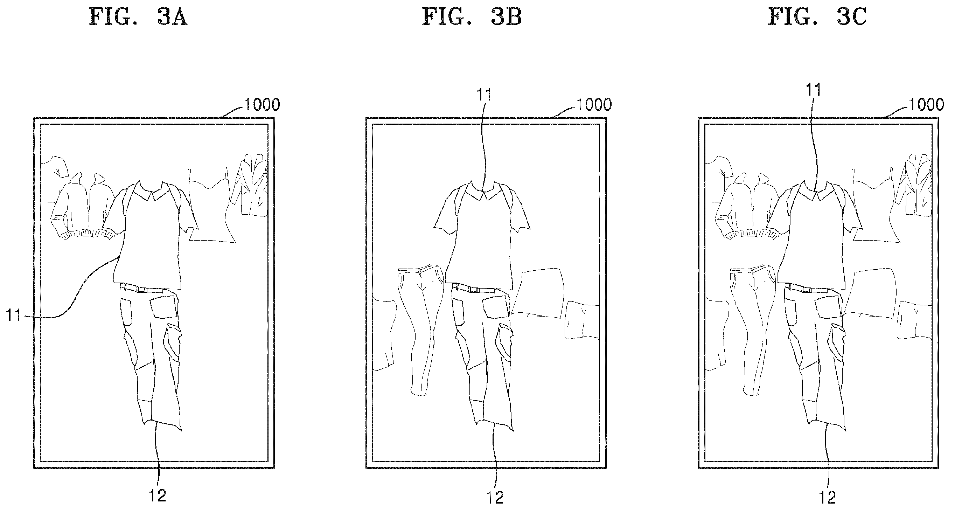

FIG. 3A illustrates an example in which the display apparatus 1000 further outputs the other upper garment product image on the screen. FIG. 3B illustrates an example in which the display apparatus 1000 further outputs the other lower garment product image on the screen. FIG. 3C illustrates an example in which the display apparatus 1000 further outputs the other upper and lower garment product images on the screen.

For example, when the display apparatus 1000 detects the user's input of a command for further outputting the other upper or lower garment product image, the screen in FIG. 2 may be switched as illustrated in FIGS. 3A, 3B, and 3C. At this time, the display apparatus 1000 may further output the other upper or lower garment product image based on a position at which the user's input is detected on the screen. In detail, the display apparatus 1000 may divide the screen into upper and lower regions based on any horizontal line. When the user's input is detected from the upper region, the display apparatus 1000 may further output the other upper garment product image as illustrated in FIG. 3A. When the user's input is detected from the lower region, the display apparatus 1000 may further output the other lower garment product image as illustrated in FIG. 3B.

As another example, the display apparatus 1000 may further output a UI for receiving the user's input of the command for outputting the other upper or lower garment product image on the screen. However, this is only an example of a scheme in which the display apparatus 1000 receives the user's input.

As illustrated in FIGS. 2, 3A, 3B, and 3C, the display apparatus 1000 may output at least one upper garment product image of a first list of a plurality of upper garment product images in a horizontal line on the screen. The display apparatus 1000 may output at least one lower garment product image of a second list of a plurality of lower garment product images on the screen in the horizontal line below the at least one upper garment product image. At this time, the horizontal line may be a curve shape rather than a linear shape in the horizontal direction.

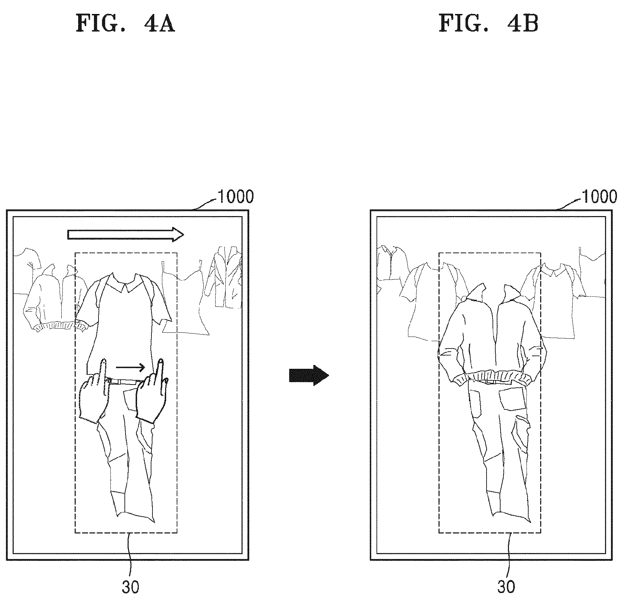

When the flick operation is detected as the user's input, the display apparatus 1000 may display the movement of the first or second list corresponding to the flick operation. For this, an example is illustrated in FIGS. 4A, 4B, 5A, 5B, 6A and 6B.

Referring to FIG. 4A, the display apparatus 1000 may display the movement of the first list corresponding to the flick operation on the screen when the flick operation is detected as the user's input.

The flick operation is an operation in which an object such as a finger moves in one direction as a touch gesture or a motion gesture. When the flick operation is a touch gesture, the flick is an operation in which an object such as a finger moves from one point on the screen to another point in one direction in a state of a touch i.e. while physically touching the screen or a proximity touch i.e. where not necessarily physically touching the screen but where proximity to the screen is detected, as for example in the case of capacitive touch sensors. When the flick operation is a motion gesture, the flick is an operation in which an object such as a hand moves from one point to another point in one direction without touching the screen. The display apparatus 1000 may detect the operation of a predetermined speed or more as a flick. A flick operation may include or alternatively be referred to as a swipe operation, and is referred to in the claims as a directional gesture.

When the display apparatus 1000 detects the flick operation from the left to the right, the display apparatus 1000 may move the first list from the left to the right. The display apparatus 1000 displays the movement of the first list, so that the screen in FIG. 4A may be switched as illustrated in FIG. 4B. When the display apparatus 1000 detects the flick operation from the right to the left, the display apparatus 1000 may move the first list from the right to the left differently from FIGS. 4A and 4B.

The display apparatus 1000 may set a focusing region 30 on the screen. Although the focusing region 30 is positioned in the middle of the screen in FIGS. 4A and 4B, the position of the focusing region 30 is not limited thereto. The display apparatus 1000 may change an upper garment product image output to the focusing region 30 on the screen due to the movement of the first list. Due to the movement of the first list, the upper garment product image on the left of the focusing region 30 in FIG. 4A is output to the focusing region 30 in FIG. 4B.

The display apparatus 1000 may perform a process of emphasizing upper and lower garment product images output to the focusing region 30. Through this, the upper and lower garment product images output to the focusing region 30 may be configured to be distinguished from upper and lower garment product images output outside the focusing region 30. For example, the display apparatus 1000 enlarges sizes of the upper and lower garment product images output to the focusing region 30 as compared with the remaining product images output outside the focusing region 30. Alternatively, a process of blurring the remaining product images output outside the focusing region 30 may be performed.

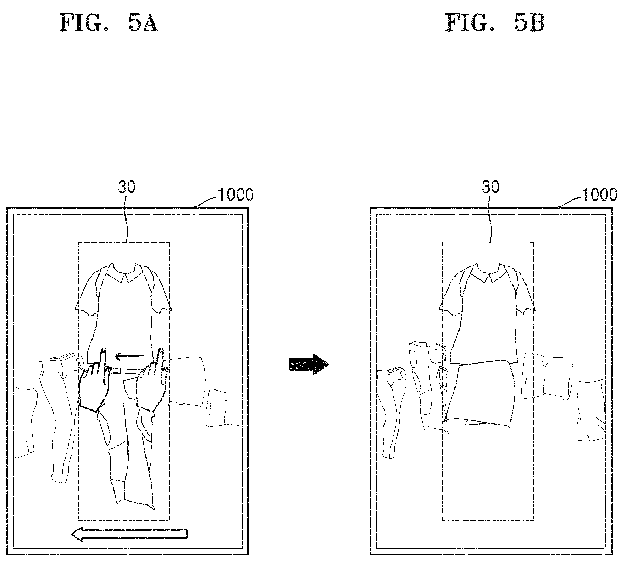

Referring to FIG. 5A as another example, the display apparatus 1000 may output the movement of the second list corresponding to the flick operation when the flick operation is detected as the user's input.

When the flick operation is detected from the right to the left, the display apparatus 1000 may move the second list from the right to the left. The display apparatus 1000 displays the movement of the first list, so that the screen in FIG. 5A may be switched as illustrated in FIG. 5B. When the display apparatus 1000 detects the flick operation from the left to the right, the display apparatus 1000 may move the second list from the left to the right differently from FIGS. 5A and 5B.

The display apparatus 1000 may change a lower garment product image output to the focusing region 30 on the screen due to the movement of the second list. Due to the movement of the second list, the lower garment product image on the right of the focusing region 30 in FIG. 5A is output to the focusing region 30 in FIG. 5B.

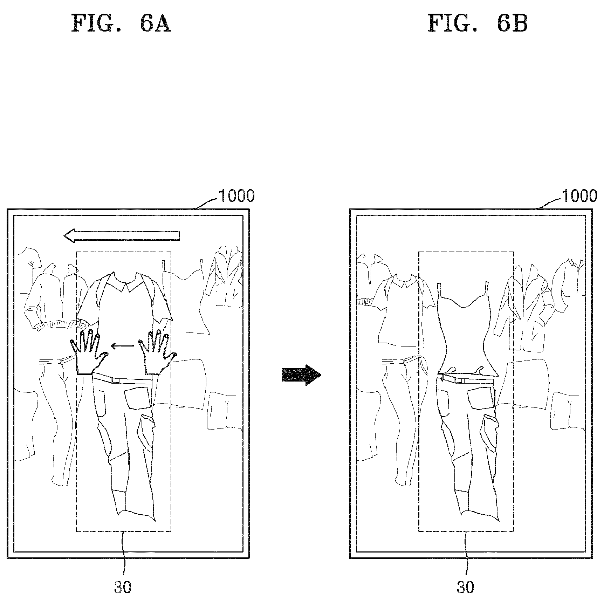

Referring to FIGS. 6A and 6B as another example, the movement of the first list from the right to the left may be displayed on the screen in correspondence with the flick operation when the display apparatus 1000 detects the flick operation from the right to the left. The display apparatus 1000 displays the movement of the first list, so that the screen in FIG. 6A may be switched as illustrated in FIG. 6B.

The display apparatus 1000 may move the first or second list based on a position at which the user's input is detected on the screen.

As illustrated in FIGS. 6A and 6B, the display apparatus 100 may determine whether the flick operation of the user relates to the upper or lower garment product image when the display apparatus 1000 outputs the upper and lower garment product images outside the focusing region 30. In detail, the display apparatus 1000 may move the first list as illustrated in FIGS. 6A and 6B when the screen is divided into upper and lower regions and the user's input is detected in the upper region. When the user's input is detected in the lower region, the display apparatus 1000 may move the second list differently from FIGS. 6A and 6B. At this time, the upper region may be a region in which the upper garment product images are output on the screen and the lower region may be a region in which the lower garment product images are output on the screen.

The display apparatus 1000 may remove the remaining product images output outside the focusing region 30 on the screen from the screen when no other flick operation is detected for a preset time after the flick operation is detected. That is, the display apparatus 1000 may output the upper and lower garment product images to only the focusing region 30. For example, the display apparatus 1000 may remove the product images output outside the focusing region 30 using a fade-out process.

As described above, the display apparatus according to the exemplary embodiment may receive at least one of the user's touch gesture and the user's motion gesture as the user's input. Through this, it is possible to interest the user by inducing the use of the user and provide product information to induce actual purchase.

The user may search for various clothing products using only a simple flick operation. In addition, the display apparatus may continuously change the upper and lower garment product images output on the screen in correspondence with the flick operation and the user may easily perform coordination while viewing various upper and lower garment product images on the screen.

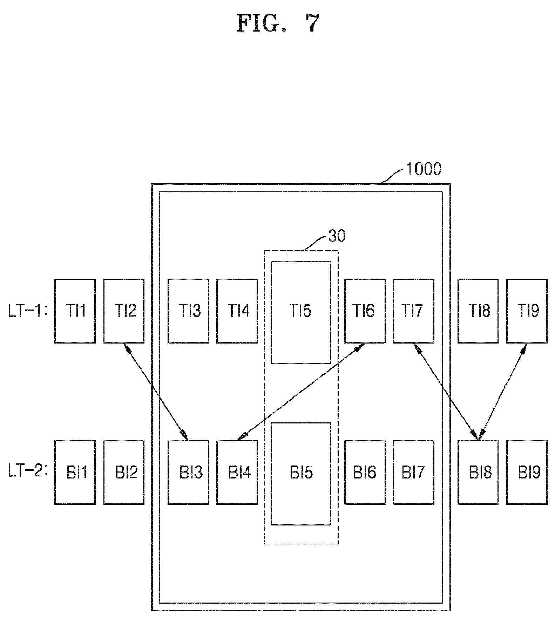

FIGS. 7, 8, and 9 are diagrams illustrating examples of first and second lists to be managed by the display apparatus 1000 according to an exemplary embodiment.

Referring to FIG. 7, the display apparatus 1000 may acquire a first list LT-1 of a plurality of upper garment product images TI1 to TI9 and a second list LT-2 of a plurality of lower garment product images BI1 to BI9. The display apparatus 1000 may further acquire information about a matching relation (indicated by an arrow) among the plurality of upper garment product images TI1 to T19 and the plurality of lower garment product images BI1 to BI9 belonging to the first list LT-1 and the second list LT-2.

As illustrated in the example of FIG. 7, the matching relation may be defined between the second upper garment product image TI2 and the third lower garment product image BI3, between the sixth upper garment product image TI6 and the fourth lower garment product image BI4, between the seventh upper garment product image TI7 and the eighth lower garment product image BI8, and between the ninth upper garment product image TI9 and the eighth lower garment product image BI8. As in the case in which the eighth lower garment product image BI8 has a matching relation with the seventh upper garment product image TI7 and the ninth upper garment product image TI9, various combinations such as many-to-one, one-to-many, and many-to-many relations are possible as well as the one-to-one relation. The matching relation may be set on various bases such as products provided from the same seller, main products, products of the same season, and color matching of upper and lower garment products.

The display apparatus 1000 may output some images TI3 to TI7 among the plurality of upper garment product images TI1 to TI9 belonging to the first list LT-1 and some images BI3 to BI7 among the plurality of lower garment product images BI1 to BI9 belonging to the second list LT-2 on the screen. As described above, the display apparatus 1000 may perform a process of emphasizing the upper garment product image TI5 and the lower garment product image BI5 output to the focusing region 30.

When the display apparatus 1000 detects the flick operation as described above, the movement of the first list LT-1 or the second list LT-2 may be displayed in correspondence with the flick operation.

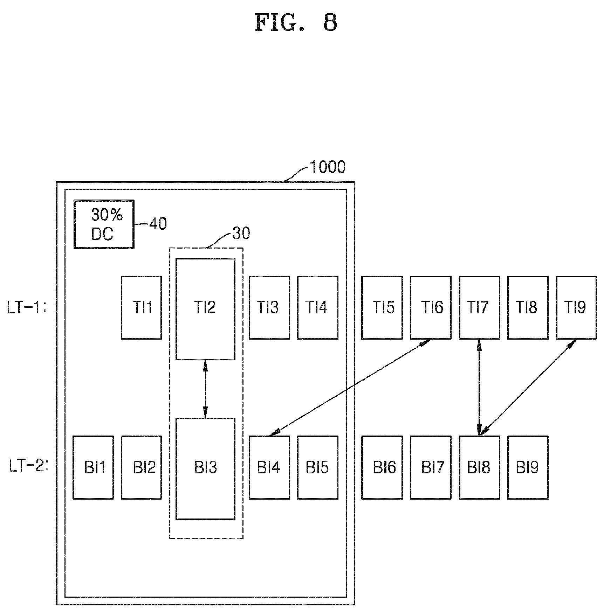

FIG. 8 illustrates an example in which the first list LT-1 or the second list LT-2 moves in FIG. 7.

When the first list LT-1 moves to the left three times and the second list LT-2 moves to the left two times in FIG. 7, the switching to the screen of the display apparatus 1000 of FIG. 8 may be performed.

Referring to FIG. 8, upper and lower garment product images output to the focusing region 30 change on the screen of the display apparatus 1000 due to the movement of the first list LT-1 and the second list LT-2. The second upper garment product image TI2 and the third lower garment product image BI3 are output to the focusing region 30 and there is a matching relation between two product images. When there is a matching relation between the upper garment product image TI2 and the lower garment product image BI3 output to the focusing region 30 as described above, the display apparatus 1000 may further output a window 40 for providing additional information. The additional information provided from the window 40 may be additional information related to the matching relation between the second upper garment product image TI2 and the third lower garment product image BI3 output to the focusing region 30. For example, the additional information may be information about a promotional advertisement such as discount coupons for a notification of the price discount of the upper garment product image TI2 and the lower garment product image BI3, a notification indicating that at least one of the upper garment product image TI2 and the lower garment product image BI3 is a best-selling product within a store, a notification indicating best matches in association with information provided by at least one clothing product seller through a server, a notification of best-selling matches, a notification of matches appearing in media such as movies, and the like.

In FIG. 8, the first list LT-1 and the second list LT-2 move linearly. As illustrated in FIG. 8, the first upper garment product image TI1 may be output to the focusing region 30 when the first list LT-1 moves to the left again according to the flick operation. In this state, the first list LT-1 may not move when the display apparatus 1000 detects the flick operation in the left direction again. This is because the first upper garment product image TI1 at one end of the first list LT-1 has reached the focusing region 30.

Unlike FIG. 8, the first list LT-1 and the second list LT-2 may move circularly.

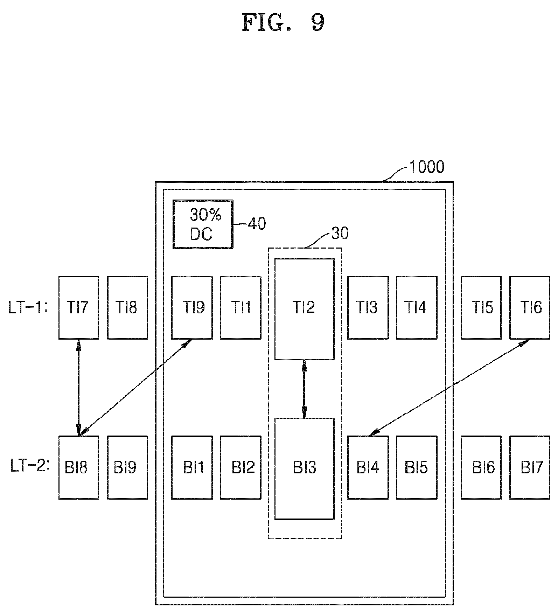

FIG. 9 illustrates an example in which the first list LT-1 and the second list LT-2 move in FIG. 7.

Referring to FIGS. 7 and 9, product images at both ends of each list LT-1 or LT-2 may be connected to each other. That is, the first upper garment product image TI1 and the ninth upper garment product image T19 of the first list LT-1 may be connected and the first lower garment product image BI1 and the ninth lower garment product image BI9 of the second list LT-2 may be connected. As illustrated in FIG. 9, the first list LT-1 and the second list LT-2 may move circularly, that is, rotate.

Although an example in which product images of each list are fixed when the display apparatus acquires each list has been described above according to an exemplary embodiment, the product images of each list may change dynamically. For example, when one upper garment product image of the first list is selected according to the existing settings or the user's selection, the display apparatus may reconfigure the second list based on the selected upper garment product image. The selection of the one upper garment product image of the first list may indicate that the selected image is output to the focusing region on the screen of the display apparatus. Next, the display apparatus may output lower garment product images based on the reconfigured second list. Likewise, even when one lower garment product image is selected from the second list, the display apparatus may reconfigure the first list based on the selected lower garment product image. The reconfigured list may include lower or upper garment product images having a matching relation with the selected upper or lower garment product image. Alternatively, the reconfigured list may be a list filtered based on information about a season, a color, or the like corresponding to the selected upper or lower garment product image.

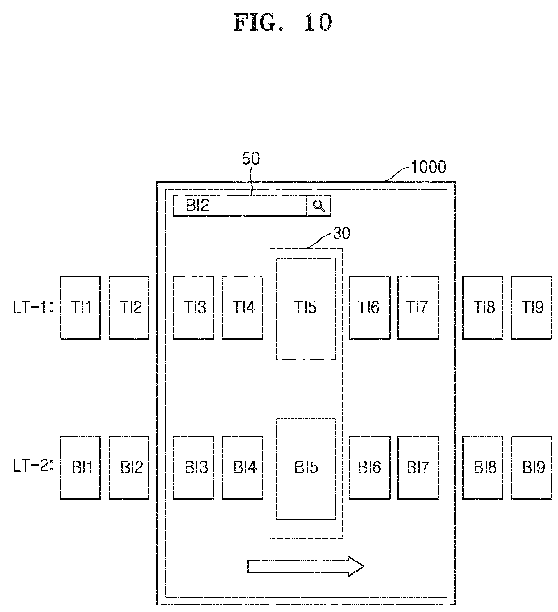

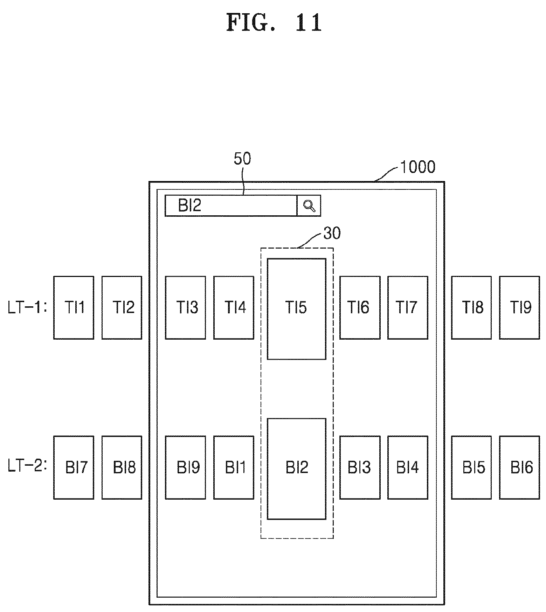

FIGS. 10 and 11 illustrate examples in which the first or second list moves in the display apparatus 1000 according to an exemplary embodiment.

Referring to FIG. 10, the display apparatus 1000 may further output a search window 50 for allowing the user to input identification information of a product image. As an example, the user may input information for identifying a second lower garment product image BI2 to the search window 50. The display apparatus 1000 may display the movement of the second list LT-2 so that the lower garment product image BI2 is output to the focusing region 30 according to the user's input. Due to the movement of the second list LT-2, the screen of the display apparatus 1000 in FIG. 10 may be switched as illustrated in FIG. 11.

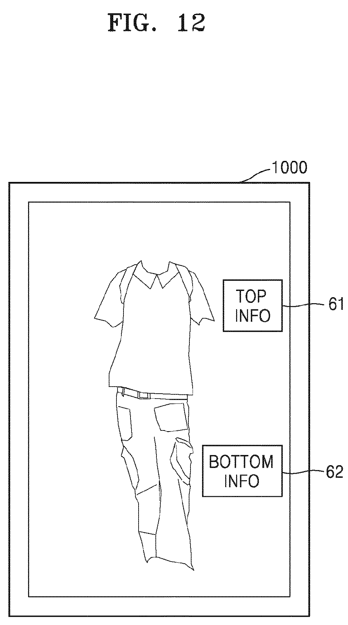

FIG. 12 is a diagram illustrating an example in which the display apparatus 1000 outputs product images on a screen according to an exemplary embodiment.

Referring to FIG. 12, the display apparatus 1000 may output upper and lower garment product images on the screen and further include an upper garment information menu window 61 for providing product information of an upper garment product image and a lower garment information menu window 62 for providing product information of a lower garment product image. At this time, the upper garment information menu window 61 and the lower garment information menu window 62 may relate to upper and lower garment product images output to the focusing region (denoted by reference numeral 30 in FIG. 11).

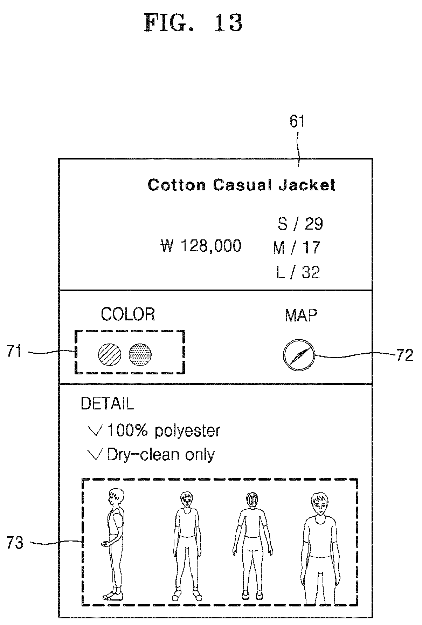

FIG. 13 illustrates an example of the upper garment information menu window 61 to be displayed by the display apparatus 1000 according to an exemplary embodiment.

Referring to FIG. 13, the upper garment information menu window 61 provides product information corresponding to an upper garment product image output by the display apparatus 1000. The upper garment information menu window 61 may provide a product name, a product price, the number of size-specific products, a detailed product description, and the like. The detailed product description may provide material quality, a washing method, etc.

In addition, the upper garment information menu window 61 may provide a color selection button 71 through which a product color of an upper garment product image currently output on the screen can be selected. When a color different from that of the upper garment product image output by the display apparatus 1000 is selected through the color selection button 71, the display apparatus 1000 may output a product image of a different color for the same product on the screen.

In addition, the upper garment information menu window 61 may include a map button 72 for providing a position of a place in which a product may be purchased.

In addition, the upper garment information menu window 61 may include a model image button 73 for outputting an image of a model wearing a product.

FIG. 13 illustrates an example of the upper garment information menu window 61, but the lower garment information menu window 62 of FIG. 12 may also be configured as in FIG. 13. Alternatively, the upper garment information menu window 61 and the lower garment information menu window 62 of FIG. 12 may be integrated and output as one menu window.

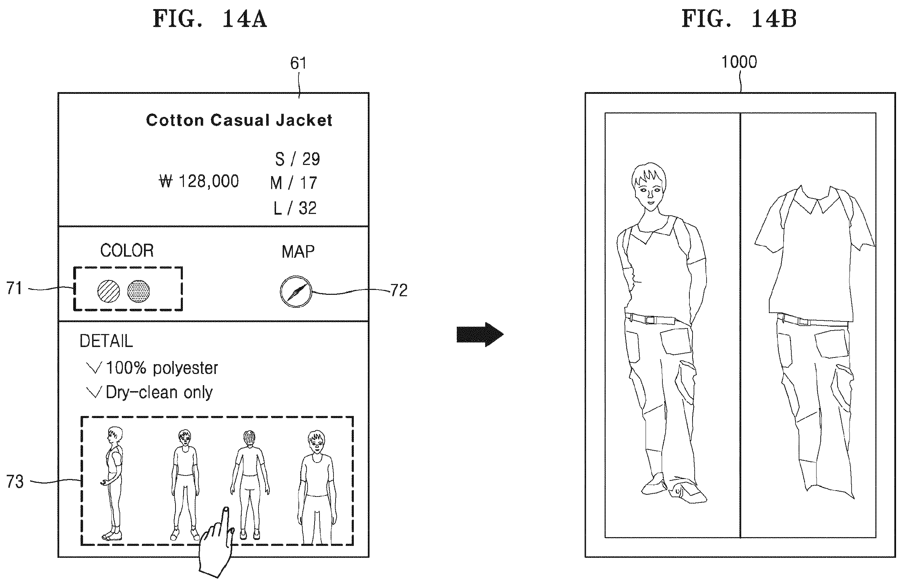

FIGS. 14A and 14B illustrate an example of screen control based on the user's input on the display apparatus 1000 according to an exemplary embodiment.

Referring to FIG. 14A, the model image button 73 may be selected by the user in the upper garment information menu window 61 output on the screen of the display apparatus 1000.

Referring to FIG. 14B, the display apparatus 1000 may further output an image of a model wearing a product of an upper garment product image output on the screen when the model image button 73 is selected. For example, the display apparatus 1000 may be switched from the screen of FIG. 12 to the screen of FIG. 14(b) according to the selection of the model image button 73.

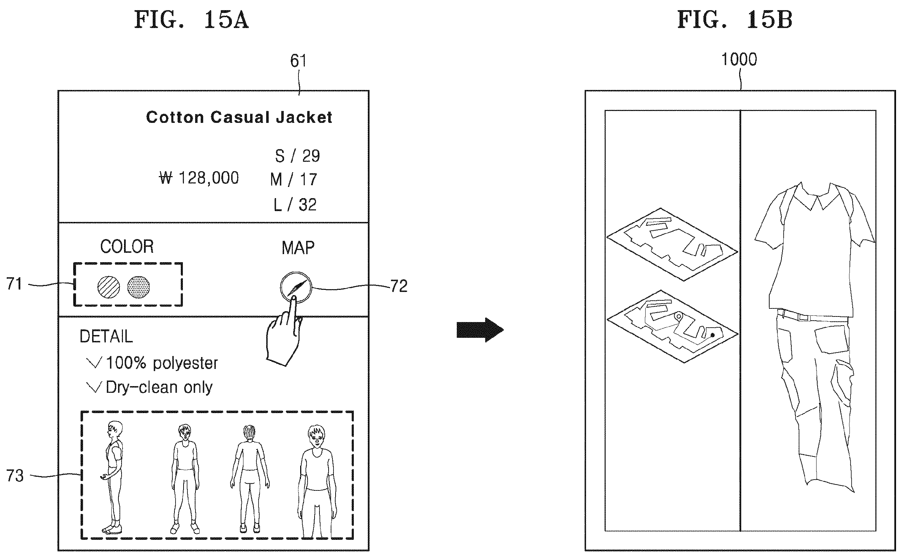

FIGS. 15A and 15B illustrate an example of screen control based on the user's input on the display apparatus 1000 according to an exemplary embodiment.

Referring to FIG. 15A, the map button 72 may be selected by the user in the upper garment information menu window 61 output on the screen of the display apparatus 1000.

Referring to FIG. 15B, the display apparatus 1000 may further output a map for providing a position of a store in which a product of an upper garment product image output on the screen may be purchased on the screen when the map button 72 is selected. For example, the display apparatus 1000 may be switched from the screen of FIG. 12 to the screen of FIG. 15(b) according to the selection of the map button 72.

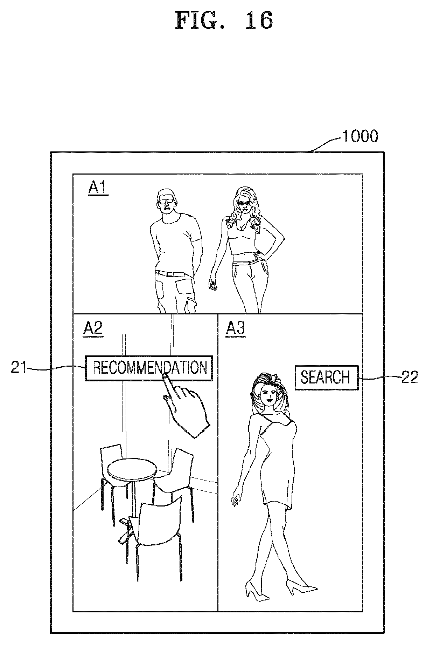

FIGS. 16, 17A, 17B, 18A, and 18B are diagrams illustrating examples of operations of the display apparatus 1000 according to an exemplary embodiment.

Referring to FIG. 16, the display apparatus 1000 may output UIs 21 and 22 for allowing the user to control the operation of the display apparatus on the screen. For example, the UIs 21 and 22 may include a recommendation button 21 for allowing the user to use a clothing recommendation function and a search button 22 for allowing the user to use a clothing search function. In addition, the display apparatus 1000 may further output a clothing advertisement image on the screen.

The display apparatus 1000 may divide the screen into a plurality of regions A1, A2, and A3, so that different images may be output in the regions A1, A2, and A3. The display apparatus 1000 may divide the screen into the first region A1 in which a clothing advertisement image is output, the second region A2 in which the recommendation button 21 is output, and the third region A3 in which the search button 22 is output.

Although the case in which the screen of the display apparatus 1000 is divided into the three regions A1 to A3 is illustrated in FIG. 16, the number or arrangement of the division regions A1 to A3 within the screen is not limited thereto.

The display apparatus 1000 may select one of the recommendation button 21 and the search button 22 based on the user's input. When one of the recommendation button 21 and the search button 22 is selected, the display apparatus 1000 may switch the screen to a screen for a recommendation function or a screen for a search function.

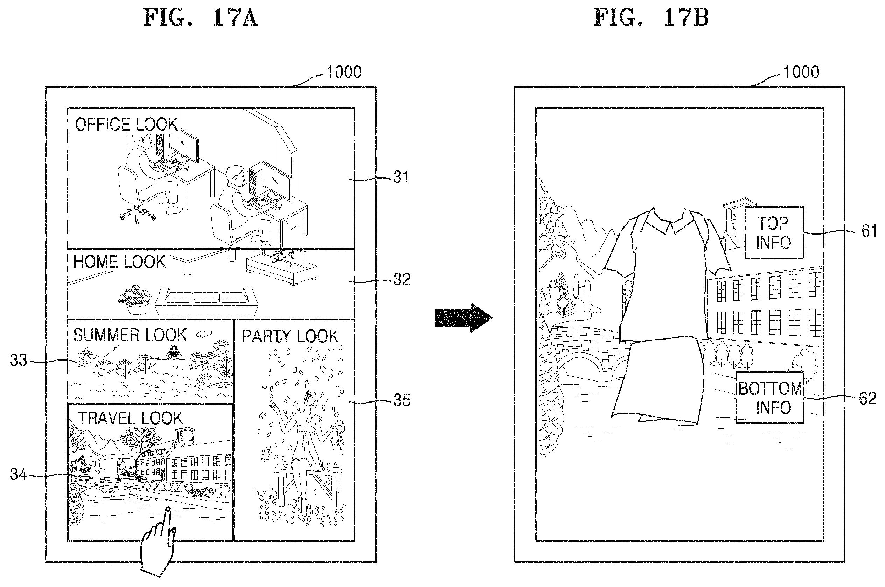

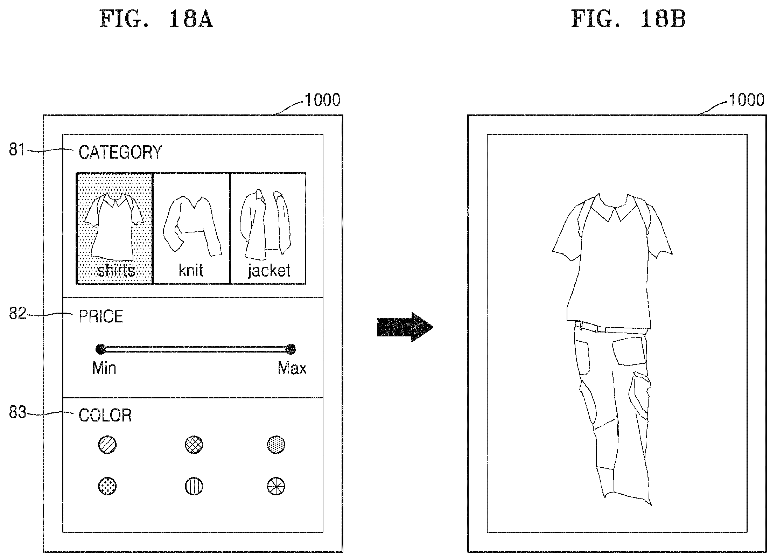

FIGS. 17A and 17B illustrate an example in which the display apparatus 1000 outputs the screen for the recommendation function according to an exemplary embodiment and FIGS. 18A and 18B illustrate an example in which the display apparatus 1000 outputs the screen for the search function according to an exemplary embodiment.

Referring to FIG. 17A, a plurality of buttons linked to reference numerals 31 to 35 through which a plurality of states can be selected may be output on the screen of the display apparatus 1000. Although an office look 31, a home look 32, a summer look 33, a travel look 34, a party look 35, and the like are illustrated as an example of a plurality of states in FIG. 17A, the present disclosure is not limited thereto. The display apparatus 1000 may output a plurality of buttons capable through which a plurality of various states can be selected based on a time, a place, an occasion, and a combination thereof.

When the display apparatus 1000 selects the travel look 34 according to the user's input in FIG. 17A, the display apparatus 1000 may acquire a first list of a plurality of upper garment product images and a second list of a plurality of lower garment product images corresponding to the travel look. For example, the display apparatus 1000 may deliver information about a state selected from among the plurality of states to the server and receive the first and second lists from the server.

Alternatively, the display apparatus 1000 may acquire the first and second lists based on data stored in a memory (not illustrated) included in the display apparatus 1000. The memory may store a first list of a plurality of upper garment product images and a second list of a plurality of lower garment product images according to a plurality of states.

As illustrated in FIG. 17B, the display apparatus 1000 may output one upper garment product image among the plurality of upper garment product images belonging to the first list and one lower garment product image among the plurality of lower garment product images belonging to the second list on the screen. In addition, the display apparatus 1000 may further output an image representing the state selected in FIG. 17A as a background on the screen.

For example, the display apparatus 1000 may output an upper garment product image having highest priority in the first list and a lower garment product image having highest priority in the second list. However, the present disclosure is not limited thereto.

In addition, the display apparatus 1000 may further output the upper garment information menu window 61 for providing product information of the upper garment product image and the lower garment information menu window 62 for providing product information of the lower garment product image. For the upper garment information menu window 61 and the lower garment information menu window 62, the above-described content may be applied.

After the display apparatus 1000 outputs the screen as illustrated in FIG. 17(b), the display apparatus 1000 may display the movement of the first or second list based on the user's input as described above with reference to FIGS. 4A, 4B, 5A, 5B, 6A and 6B.

Again referring to FIG. 16, the display apparatus 1000 may select the search button 22 based on the user's input and therefore the display apparatus 1000 may switch the screen in FIG. 16 as illustrated in FIG. 18A.

Referring to FIG. 18A, the display apparatus 1000 may display a plurality of search condition windows 81 to 83 so that the user may input a plurality of search conditions. A window 81 for selecting a category of a clothing product, a window 82 for selecting a price range of a clothing product, and a window 83 for selecting a color of a clothing product are illustrated in FIG. 18A, but the present disclosure is not limited thereto.

The display apparatus 1000 may select a category of a clothing product, a price range of the clothing product, a color of the clothing product, and the like based on the user's input and acquire a first list of a plurality of upper garment product images and a second list of a plurality of lower garment product images according to a selected search condition. The display apparatus 1000 may be connected to the server to receive the first and second lists according to search conditions from the server. Alternatively, the display apparatus 1000 may acquire the first and second lists through filtering using the search conditions based on data stored in the memory (not illustrated) included in the display apparatus 1000.

The display apparatus 1000 may receive the search conditions for all upper and lower garment products from the user. Alternatively, the display apparatus 1000 may receive only the search condition for the upper or lower garment product from the user. In this case, the display apparatus 1000 may first determine one of the first and second lists and determine another list matching the determined list. At this time, the other list may be determined based on a matching relation (see FIG. 7) among the plurality of upper garment product images and the plurality of lower garment product images.

The display apparatus 1000 may output the upper and lower garment product images on the screen as illustrated in FIG. 18B based on the acquired first and second lists. For example, the display apparatus 1000 may output the upper garment product image having highest priority in the first list and the lower garment product image having highest priority in the second list. However, the present disclosure is not limited thereto.

After the display apparatus 1000 outputs the screen as illustrated in FIG. 18(b), the display apparatus 1000 may display the movement of the first or second list based on the user's input as described with reference to FIGS. 4A, 4B, 5A, 5B, 6A and 6B.

In addition, the display apparatus 1000 may further include a home button (not illustrated) for returning to an initial screen (for example, FIG. 16). The home button may be output on the screen or may be implemented by a physical button in the display apparatus 1000. In addition, the display apparatus 1000 may further include a screen switching button capable of performing switching to the previous screen or the next screen.

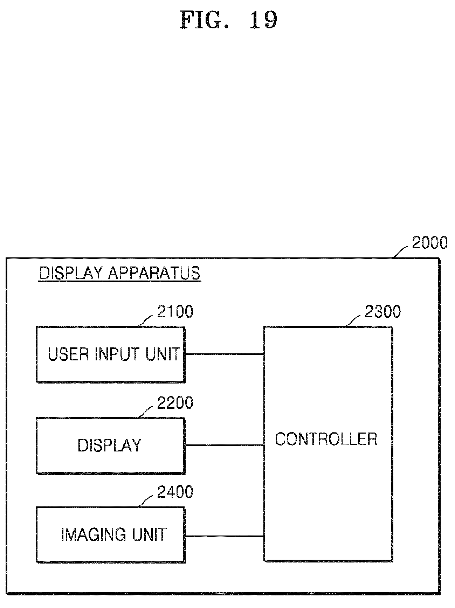

FIG. 19 illustrates a configuration of a display apparatus 2000 according to an exemplary embodiment.

Referring to FIG. 19, the display apparatus 2000 may include a user input unit 2100, a display 2200, a controller 2300, and an imaging unit 2400. Because the user input unit 2100, the display 2200, and the controller 2300 are configured in correspondence with the user input unit 1100, the display 1200, and the controller 1300 of FIG. 1, redundant description thereof will be omitted.

The imaging unit 2400 may acquire image data by imaging the user. That is, the imaging unit 2400 may acquire the image data in which the user in front of the display apparatus 2000 is imaged. At this time, the imaging unit 2400 may acquire image data in which the entire body of the user is imaged.

The controller 2300 may acquire user information based on the image data. The user information may be about the user's height and position and the like. The user's height and position may be a relative height and position with respect to the screen of the display apparatus 2000.

The controller 2300 may adjust sizes and positions of upper and lower garment product images output on the screen based on the user information. For example, when the user is a child, the display apparatus 2000 may determine that the user is short and the user is positioned below the screen through the user information. In this case, the display apparatus 2000 may reduce sizes of the upper and lower garment product images and output the upper and lower garment product images on a lower portion of the screen. Through this, it is possible to prevent the upper and lower garment product images from being output at an excessively high or low position on the screen of the display apparatus 2000 when the user performs hand motion. Accordingly, the user may conveniently operate the display apparatus 2000 through the hand motion.

In addition, the controller 2300 may output the upper and lower garment product images on the user's image on the screen based on image data. That is, the controller 2300 may output the appearance of the user wearing the upper and lower garment products on the screen based on the image data and the upper and lower garment product images. Through this, the user may easily know whether the upper and lower garment product images match his/her face and body.

In addition, the display apparatus 2000 may display the movement of the first or second list as described above.

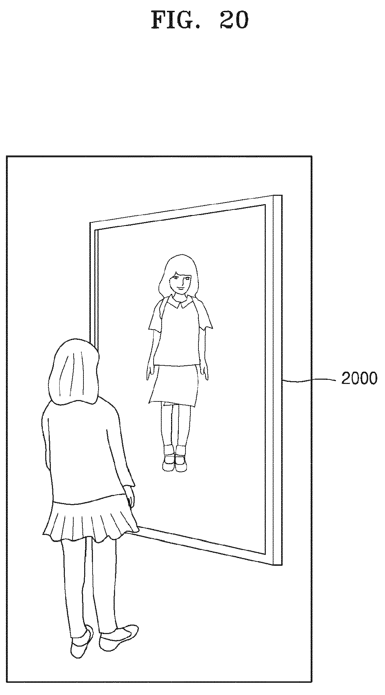

FIG. 20 is an example in which the user uses the display apparatus 2000 according to an exemplary embodiment.

Referring to FIG. 20, the size of the display apparatus 2000 may be large so that upper and lower garment product images of actual sizes may be displayed on one screen. The display apparatus 2000 may acquire the user information by imaging the user and adjust and output sizes and positions of the upper and lower garment product images at a position suitable for the user to control the display apparatus 2000. Through this, it is possible to prevent the upper and lower garment product images from being output at an excessively high or low position on the screen of the display apparatus 2000 when the user performs hand motion. Accordingly, the user may conveniently operate the display apparatus 2000 through the hand motion.

In addition, the display apparatus 2000 may output the upper and lower garment product images on the user's image on the screen based on image data obtained by imaging the user. Through this, the user may easily know whether the upper and lower garment product images match his/her face and body.

In addition, because the display apparatus 2000 may display the movement of the first or second list according to a simple flick operation of the user, the user may easily search for upper and lower garment products matching his/her face and body.

However, the display apparatus 2000 of FIG. 20 is only an example. The display apparatus 2000 may be manufactured in a small size as in a portable terminal.

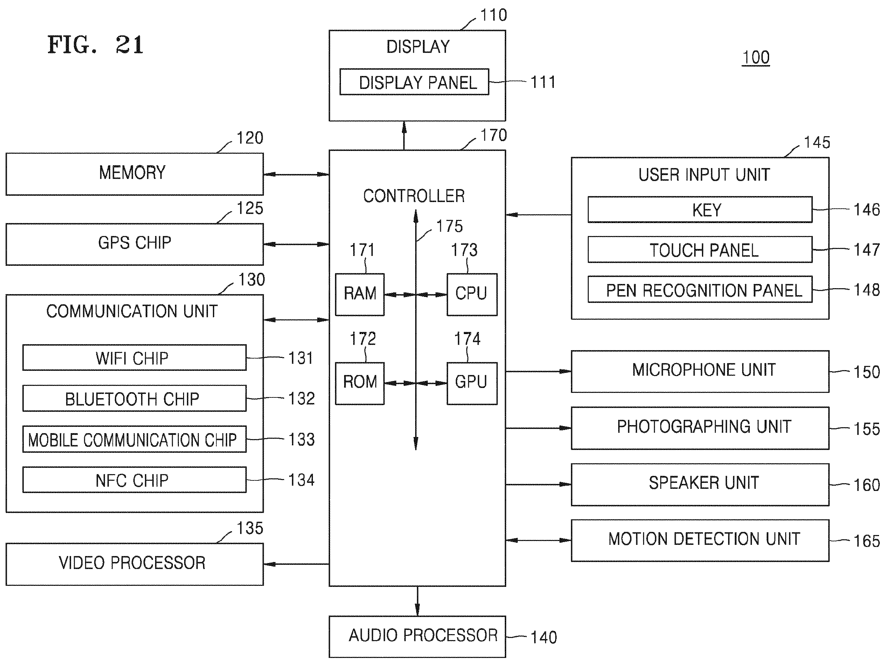

FIG. 21 is a block diagram illustrating a configuration of the display apparatus according to an exemplary embodiment. The configuration of the display apparatus illustrated in FIG. 21 may be applied to both of the display apparatuses 1000 and 2000 of FIGS. 1 and 19.

As illustrated in FIG. 21, the configuration of the display apparatus 100, for example, may be applied to various types of apparatuses such as a smartphone, a tablet PC, a PDA, an MP3 player, a kiosk, an electronic picture frame, a navigation apparatus, a digital TV, and a wearable device such as a wrist watch or a head-mounted display (HMD).

As illustrated in FIG. 21, the display apparatus 100 may include at least one of a display 110, a controller 170, a memory 120, a GPS chip 125, a communication unit 130, a video processor 135, an audio processor 140, a user input unit 145, a microphone unit 150, an imaging unit (e.g. photographing unit 155), a speaker unit 160, and a motion detection unit 165.

The display 110 may include a display panel 111 and a controller (not illustrated) for controlling the display panel 111. The display panel 111 may be implemented as various types of displays such as a liquid crystal display (LCD), an organic light emitting diode (OLED) display, an active-matrix organic light-emitting diode (AM-OLED) display, and a plasma display panel (PDP). The display panel 111 may be implemented as a flexible, transparent or wearable panel. The display 110 may be provided as a touch screen (not illustrated) in combination with a touch panel 147 of the user input unit 145. For example, the touch screen (not illustrated) may include an integrated module in which the display panel 111 and the touch panel 147 are coupled in a stacked structure.

The memory 120 may include at least one of an internal memory (not illustrated) and an external memory (not illustrated).

The internal memory, for example, may include at least one of a volatile memory (for example, a dynamic random access memory (RAM) (DRAM), a static RAM (SRAM), a synchronous DRAM (SDRAM), or the like), a non-volatile memory (for example, a one time programmable read only memory (ROM) (OTPROM), a programmable ROM (PROM), an erasable and programmable ROM (EPROM), an electrically erasable and programmable ROM (EEPROM), a mask ROM, a flash ROM, or the like), a hard disk drive (HDD), and a solid state drive (SSD). According to an exemplary embodiment, the controller 170 may load a command or data received from at least one of a non-volatile memory or other components to a volatile memory to process the loaded command or data. In addition, the controller 170 may save data received or generated from other components in the non-volatile memory.

The external memory, for example, may include at least one of a CompactFlash (CF), Secure Digital (SD), Micro Secure Digital (Micro-SD), Mini Secure Digital (Mini-SD), extreme Digital (xD), and a Memory Stick.

The memory 120 may store various types of programs and data for use in the operation of the display apparatus 100.

The controller 170 may control the display 110 so that some of content stored in the memory 120 is displayed on the display 110. In other words, the controller 170 may display some of content stored in the memory 120 on the display 110. Alternatively, the controller 170 may perform a control operation corresponding to the user's gesture when the user's gesture is performed in one region of the display 110.

The controller 170 may include at least one of a RAM 171, a ROM 172, a CPU 173, a GPU 174, and a bus 175. The RAM 171, the ROM 172, the CPU 173, the GPU 174, etc. may be connected to each other through the bus 175.

The CPU 173 accesses the memory 120 to perform booting using an operating system (OS) stored in the memory 120. Various operations are performed using various types of programs, content, data, and the like stored in the memory 120.

The ROM 172 stores a set of commands for system booting, etc. For example, if a turn-on command is input and power is supplied to the display apparatus 100, the CPU 173 copies the OS stored in the memory 120 onto the RAM 171 according to a command stored in the ROM 172 and boots a system by executing the OS. When the booting is completed, the CPU 173 copies various application programs stored in the memory 120 onto the RAM 171 and performs the various operations by executing the application programs copied in the RAM 171. When the booting of the display apparatus 100 is completed, a UI screen is displayed in a region of the display 110. In detail, the GPU 174 may generate a screen on which an electronic document including various objects such as content, an icon, and a menu is displayed. The GPU 174 calculates attribute values such as coordinate values, forms, sizes, and colors in which objects are displayed according to a layout of the screen. The GPU 174 may generate screens of various layouts including objects based on the calculated attribute values. The screen generated from the GPU 174 may be provided to the display 110 and displayed in each region of the display 110.

The GPS chip 125 may receive a GPS signal from a GPS satellite and calculate a current position of the display apparatus 100. When the controller 170 uses a navigation program or when the user's current position is necessary, it is possible to calculate the user's position using the GPS chip 125.

The communication unit 130 may communicate with various types of external devices according to various types of communication schemes. The communication unit 130 may include at least one of a Wireless Fidelity (Wi-Fi) chip 131, a Bluetooth chip 132, a wireless communication chip 133, and a near field communication (NFC) chip 134. The controller 170 may communicate with various types of external devices using the communication unit 130.

The Wi-Fi chip 131 and the Bluetooth chip 132 may perform communication using a Wi-Fi scheme and a Bluetooth scheme, respectively. When the Wi-Fi chip 131 or the Bluetooth chip 132 is used, it is possible to transmit and receive various types of information after various types of connection information such as a service set identifier (SSID) and a session key are first transmitted and received and a communication connection is made using the connection information. The wireless communication chip 133 is a chip for performing communication according to various communication standards such as Institute of Electrical and Electronics Engineers (IEEE), Zigbee, 3rd Generation (3G), 3rd Generation Partnership Project (3GPP), and Long Term Evolution (LTE). The NFC chip 134 is a chip operable in an NFC scheme using a band of about 13.56 MHz among various radio frequency identification (RFID) frequency bands such as about 135 kHz, 13.56 MHz, 433 MHz, 860 to 960 MHz, and 2.45 GHz.

The video processor 135 may process video data included in content received through the communication unit 130 or content stored in the memory 120. The video processor 135 may perform various types of image processing such as decoding, scaling, noise filtering, frame rate conversion, and resolution conversion on the video data.

The audio processor 140 may process audio data included in content received through the communication unit 130 or content stored in the memory 120. The audio processor 140 may perform various types of processing such as decoding, amplification, and noise filtering on the audio data.

When a program for reproducing multimedia content is executed, the controller 170 may drive the video processor 135 and the audio processor 140 to reproduce relevant content. The speaker unit 160 may output the audio data generated by the audio processor 140.

The user input unit 145 may receive various commands from the user. The user input unit 145 may include at least one of a key 146, a touch panel 147, and a pen recognition panel 148.

The key 146 may include various types of keys such as a mechanical button and a wheel formed in various regions such as front, side, and rear surface portions of the exterior of the main body of the display apparatus 100.

The touch panel 147 may detect the user's touch input and output a touch event value corresponding to a detected touch signal. When the touch panel 147 constitutes a touch screen (not illustrated) in combination with the display panel 111, the touch screen may be implemented as various types of touch sensors such as capacitive, resistive, and piezoelectric sensors. The capacitive sensor calculates touch coordinates by detecting micro electricity excited by a user's body when part of the user's body touches the surface of the touch screen by using a dielectric coated on the surface of the touch screen. The resistive sensor includes two electrode plates embedded in the touch screen, and detects that an electric current flows due to the contact between the upper and lower plates of the touched point to calculate touch coordinates when the user touches the screen. Although a touch event may be mainly generated by a human finger in the touch screen, the touch event may also be generated by a conductive material capable of giving a change in electrostatic capacitance.

The pen recognition panel 148 may detect a proximity input or a touch input of a pen according to an operation of a touch pen (for example, a stylus pen or a digitizer pen) of the user and output the detected pen proximity event or pen touch event. The pen recognition panel 148, for example, may be implemented in an electron magnetic resonance (EMR) method, and detect a touch or a proximity input according to a change in the intensity of an electromagnetic field by the proximity or touch of the pen. In detail, the pen recognition panel 148 may be configured to include an electronic induction coil sensor (not illustrated) having a grid structure and an electronic signal processing unit (not illustrated) for sequentially providing an alternating current (AC) signal having a predetermined frequency to each loop coil of the electronic induction coil sensor. When there is a pen including a built-in resonant circuit in the vicinity of a loop coil of the pen recognition panel 148, a magnetic field transmitted from the corresponding loop coil generates an electric current based on the mutual electromagnetic induction in the resonant circuit within the pen. Based on the electric current, an inductive magnetic field is generated from a coil constituting the resonant circuit of the pen, and the pen recognition panel 148 may detect the inductive magnetic field from a loop coil which is in the state of receiving a signal to detect a proximity position or a touch position of the pen. The pen recognition panel 148 may be provided to have a given area in the lower portion of the display panel 11, for example, an area capable of covering a display region of the display panel 111.

The microphone unit 150 may receive the user's voice or another sound and convert the received voice or sound into audio data. The controller 170 may use the user's voice input through the microphone unit 150 in a communication operation or convert the voice into audio data so that the audio data may be stored in the memory 120.

The imaging unit 155 may image a still image or a moving image according to control of the user. The imaging unit 155 may be implemented by front and rear surface cameras.

When the imaging unit 155 and the microphone unit 150 are provided, the controller 170 may perform a control operation according to the user's voice input through the microphone unit 150 or the user's motion recognized by the imaging unit 155. For example, the display apparatus 100 may operate in a motion control mode or a voice control mode. When the operation is performed in the motion control mode, the controller 170 images the user by activating the imaging unit 155 and tracks a change in the user's motion to perform a control operation according to the tracked change. When the operation is performed in a voice control mode, the controller 170 is operable in a voice recognition mode in which the user's voice input through the microphone unit 150 is analyzed and the control operation is performed according to the analyzed user voice.

The motion detection unit 165 may detect the motion of the main body of the display apparatus 100. The display apparatus 100 may rotate or tilt in various directions. At this time, the motion detection unit 165 may detect motion properties such as a rotation direction, an angle, and a slope by using at least one of various sensors such as a geomagnetic sensor, a gyro sensor, and an acceleration sensor.

In addition, although not illustrated in FIG. 21, the display apparatus 100 may further include a Universal Serial Bus (USB) port to be connected with a USB connector, various external input ports to be connected to various external ports such as a headset, a mouse, and a Digital Multimedia Broadcasting (DMB) chip to receive and process a DMB signal depending on exemplary embodiments.

The names of the above-described components of the display apparatus 100 may differ. In addition, the display apparatus 100 according to the exemplary embodiment may be configured to include at least one of the above-described components. Some components may be omitted from the display apparatus 100 or other additional components may be further included in the display apparatus 100.

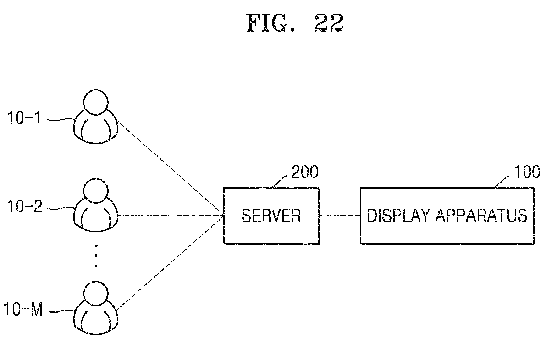

FIG. 22 illustrates an example in which the display apparatus 100 is connected to the server 200 according to an exemplary embodiment. All the above-described content of the display apparatus is applicable to the display apparatus 100 of FIG. 22.

Referring to FIG. 22, the server 200 may register data about a plurality of clothing products from a plurality of clothing product sellers 10-1, 10-2, ..., 10-M. The clothing product sellers 10-1, 10-2, ..., 10-M may register data for clothing products to be sold by the sellers in the server 200 using a terminal connectable to the server 200. The data for the clothing products may include images of clothing products, a matching relation between upper and lower garment product images, prices, colors, and material qualities of clothing products, etc.

The display apparatus 100 may further include the communication unit (denoted by reference numeral 130 of FIG. 21) to communicate with the server 200. In the display apparatus 100, the controller (denoted by reference numeral 170 of FIG. 21) may control the communication unit to exchange information with the server 200. The display apparatus 100 may receive first and second lists based on data for a plurality of clothing products.

The server 200 may include a first server to which a plurality of clothing product sellers 10-1, 10-2, ..., 10-M are connectable and a second server to which the display apparatus 100 is connectable. For example, the first server may be a server of stores in which the plurality of clothing product sellers 10-1, 10-2, ..., 10-M sell clothing products. The first and second servers may be linked with each other.

Through this, the display apparatus 100 may acquire upper and lower garment product images provided by the plurality of clothing product sellers 10-1, 10-2, ..., 10-M. Accordingly, the user may easily search for the upper and lower garment products together even when a seller who sells the upper garment product is different from a seller who sells the lower garment product. In addition, when the plurality of clothing product sellers 10-1, 10-2, ..., 10-M register latest clothing product information in the server 200, the display apparatus 100 may provide the user with the latest clothing product information.

As described above, the display apparatus according to an exemplary embodiment may receive at least one of a touch gesture and a motion gesture of the user as the user's input. Through this, it is possible to interest the user by inducing the use of the user and provide product information to induce actual purchase.

The user may search for various clothing products using only a simple flick operation. In addition, the display apparatus may continuously change the upper and lower garment product images output on the screen in correspondence with the flick operation and the user may easily perform coordination while viewing various upper and lower garment product images on the screen. Accordingly, the display apparatus may provide the user with convenience for product purchase because the user may easily recognize whether the upper and lower garment product images match. In addition, the user may easily search for clothing products in a short time through the display apparatus without searching for various clothing products provided in a clothing store one by one.

Through this, it is possible to increase the satisfaction of the user using the display apparatus by increasing the convenience of the user.

That is, the display apparatus according to the exemplary embodiment may induce purchase by providing clothing products suitable for the user through accurate search and recommendation functions for many clothing products which change at a high speed.

Accordingly, a display apparatus and a method of operating the display apparatus for enabling interaction with a user to be efficiently performed may be provided. Through this, it is possible to increase the satisfaction of the user using the display apparatus by increasing the convenience of the user.

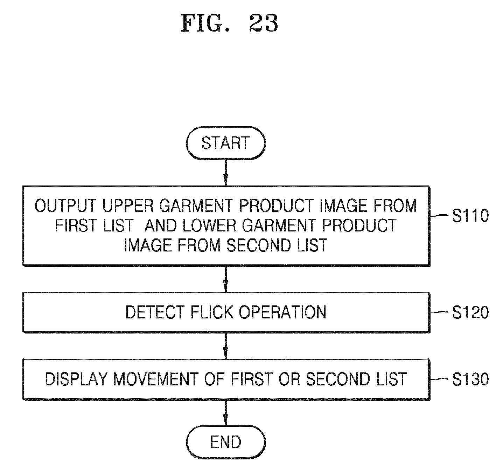

FIG. 23 is a flowchart of an operation method of the display apparatus according to an exemplary embodiment.

Referring to FIG. 23, the display apparatus may output at least one upper garment product image from a first list of a plurality of upper garment product images in a horizontal line on a screen of the display apparatus and output at least one lower garment product image from a second list of a plurality of lower garment product images in a horizontal line below the at least one upper garment product image on the screen (S110).

The display apparatus may detect the user's input as a flick operation (S120). The display apparatus may output movement of the first or second list corresponding to the flick operation on the screen (S130).

The display apparatus may move the first or second list based on a position at which the flick operation is detected on the screen.

The display apparatus may change an upper or lower garment product image output to a focusing region on the screen according to the movement of the first or second list.

When no other flick operation is detected for a preset time after the flick operation is detected, the display apparatus may remove the remaining product image output outside the focusing region on the screen from the screen.

The display apparatus may perform a process of emphasizing upper and lower garment product images output to the focusing region.

The display apparatus may further output a window for providing additional information when there is a matching relation between upper and lower garment product images output to the focusing region.

The display apparatus may communicate with a server for registering data for a plurality of clothing products from a plurality of clothing product sellers and receive the first and second lists based on data from the server.

The display apparatus may output a UI for receiving one of a plurality of states selected by the user on the screen, deliver information about the selected state of the plurality of states to the server, and receive the first and second lists based on the data and the information from the server.

The display apparatus may output an image indicating the selected state as a background on the screen.

The display apparatus may acquire image data by imaging the user. In addition, the display apparatus may acquire information about the user based on the image data and adjust a size and a position of the at least one upper garment product image and a size and a position of the at least one lower garment product image output on the screen based on the user information.

An operation method of the display apparatus of FIG. 23 may be performed in the display apparatus described with reference to the drawings. Each step of the operation method of the display apparatus may be performed in the above-described scheme.

Processes, functions, methods, programs, applications, and/or software in apparatuses described herein may be recorded, stored, or fixed in one or more non-transitory computer-readable media (computer readable storage (recording) media) that includes program instructions (computer readable instructions) to be implemented by a computer to cause one or more processors to execute (perform or implement) the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable media include magnetic media, such as hard disks, floppy disks, and magnetic tape; optical media such as CD ROM disks and DVDs; magnetooptical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions may be executed by one or more processors. The described hardware devices may be configured to act as one or more software modules that are recorded, stored, or fixed in one or more non-transitory computer-readable media, in order to perform the operations and methods described above, or vice versa. In addition, a non-transitory computer-readable medium may be distributed among computer systems connected through a network and program instructions may be stored and executed in a decentralized manner. In addition, the computer-readable media may also be embodied in at least one application specific integrated circuit (ASIC) or Field Programmable Gate Array (FPGA).

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the invention as defined by the following claims.

## Claims

1. A display apparatus comprising:
a user input unit configured to receive an input from a user;
a display; and
a controller configured to output at least one upper garment product image from a first list of a plurality of upper garment product images in a horizontal line on a screen of the display and output at least one lower garment product image from a second list of a plurality of lower garment product images in a horizontal line below the at least one upper garment product image on the screen,
wherein, when a directional gesture is detected as the user's input, the controller displays movement of the first list or the second list corresponding to the directional gesture on the screen.

2. The display apparatus according to claim 1, wherein the controller moves the first list or the second list based on a position at which the directional gesture is detected on the screen.

3. The display apparatus according to claim 1 or 2, wherein the controller changes the at least one upper garment product image or the at least one lower garment product image output to a focusing region on the screen according to the movement of the first list or the second list.

4. The display apparatus according to claim 3, wherein, when no other directional gesture is detected for a preset time after the directional gesture is detected, the controller removes at least one product image output outside the focusing region on the screen from the screen.

5. The display apparatus according to claim 3 or 4, wherein the controller performs a process of emphasizing upper garment product image and lower garment product image output to the focusing region.

6. The display apparatus according to claim 3, 4 or 5, wherein the controller further outputs a window for providing additional information when there is a matching relationship between upper garment product image and lower garment product image output to the focusing region.

7. The display apparatus according to any one of the preceding claims, further comprising:
a communication unit configured to communicate with a server which registers data about a plurality of clothing products from a plurality of clothing product sellers,
wherein the controller controls the communication unit to receive the first list and the second list based on the registered data from the server.

8. The display apparatus according to claim 7, wherein the controller outputs a user interface (UI) for receiving one of a plurality of states selected by the user on the screen, delivers information about the selected state of the plurality of states to the server, and receives the first list and second list from the server.

9. The display apparatus according to claim 8, wherein the controller outputs an image indicating the selected state as a background on the screen.

10. The display apparatus according to any one of the preceding claims, further comprising:
an imaging unit configured to acquire image data by imaging the user,
wherein the controller acquires information about the user based on the image data and adjusts a size and a position of the at least one upper garment product image and a size and a position of the at least one lower garment product image output on the screen based on the user information.

11. An operation method of a display apparatus, the method comprising:
outputting at least one upper garment product image from a first list of a plurality of upper garment product images in a horizontal line on a screen of the display and outputting at least one lower garment product image from a second list of a plurality of lower garment product images in a horizontal line below the at least one upper garment product image on the screen;
detecting the input from a user as a directional gesture; and
displaying movement of the first list or the second list corresponding to the directional gesture on the screen.

12. The operation method of the display apparatus according to claim 11, wherein the first list or the second list is moved based on a position at which the directional gesture is detected on the screen.

13. The operation method of the display apparatus according to claim 11 or 12, wherein the at least one upper garment product image or the at least one lower garment product image output to a focusing region on the screen changes according to the movement of the first list or the second list.

14. The operation method of the display apparatus according to claim 13, further comprising:
further outputting a window for providing additional information when there is a matching relationship between upper and lower garment product images output to the focusing region.

15. A computer program which, when executed by a processor, is arranged to perform a method according to any one of claims 11 to 14.
